# FASCICULE DE BREVET EUROPEEN

(11) **EP 0 449 733 B1**
(45) Date de publication et mention de la délivrance du brevet: **16.06.1993**
(21) Numéro de dépôt: 91400838.8
(22) Date de dépôt: 28.03.1991
(51) Int. Cl.: E04F 15/14, E04G 15/06, E04F 19/02

(54) **Profilé destiné à être utilisé pour réaliser la jonction entre deux revêtements de surface séparés par un angle rentrant et procédé de fabrication d'un tel profilé**
Profil angewendet zur Herstellung der Verbindung zwischen zwei Oberflächenverkleidungen getrennt durch einen Innenwinkel und Verfahren zur Herstellung dieses Profils
Section for use in realising the junction between two surface-coverings separated by an internal angle and method for realising this section

(30) Priorité: 30.03.1990 FR 9004116
(43) Date de publication de la demande: 02.10.1991
(73) Titulaire: TOMECANIC, Société Anonyme:, 78410 Aubergenville (FR)
(72) Inventeur: Pourtau, Jean-Jacques, F-78290 Croissy sur Seine (FR); Pourtau, Thierry Eric, F-78290 Croissy sur Seine (FR)
(74) Mandataire: Hoisnard, Jean-Claude

(56) Documents cités:
- DE-A- 3 138 380
- DE-U- 8 600 241
- DE-U- 8 700 465
- DE-U- 8 808 171
- FR-A- 2 487 409
- FR-A- 2 576 945
- GB-A- 1 190 252

## Description

L'invention concerne la réalisation d'un profilé spécifique pour, d'une part, assurer l'étanchéité d'un angle rentrant constitué par deux revêtements de carrelages ou autres matériaux appliqués sur murs, cloisons ou sols posés respectivement dans des plans différents, plus communément à 90°, d'autre part, assurer la jonction entre les deux revêtements précédemment cités, de façon à absorber les mouvements angulaires de retraits, de dilatations ou de tensions provoqués aussi bien par les revêtements, que les murs, cloisons ou sols. La jonction entre eux d'éléments de murs, cloisons ou sols présente encore à ce jour d'importants problèmes de raccordements notamment pour les revêtements les recouvrant.

Différentes solutions connues à ce jour proposent des solutions que l'on peut classer dans deux grandes catégories.

La première catégorie représente les solutions à base de jonctions réalisées et coulées sur place à base de silicones ou autres matières élastiques. Malheureusement ces solutions ne sont que temporaires, car à plus ou moins longue échéance la matière élastique se dégrade sur le plan esthétique, et se décolle des matériaux avec lesquels elle devait assurer une parfaite jonction. Il faut alors déposer la jonction en mauvais état, nettoyer les surfaces et réaliser à nouveau un joint neuf.

La deuxième catégorie de solutions consiste en des systèmes mécaniques de deux éléments généralement placés à 90° et présentant des sections particulières permettant le glissement d'un élément mâle dans un élément femelle.

Ces systèmes présentent aussi des inconvénients notoires comme, par exemple, leur apparence trop importante et inesthétique, ainsi qu'un manque de parfaite étanchéité et une grande difficulté d'entretien.

La présente invention a précisément pour but de proposer un profilé permettant la réalisation esthétique, durable et fonctionnelle de jonctions d'angles rentrants constitué par deux revêtements de carrelages ou autres matériaux appliqués sur des murs, cloisons ou sols.

L'invention a donc pour objet un profilé destiné à être utilisé pour réaliser la jonction entre deux revêtements de surface faisant entre eux un angle rentrant déterminé, tels que des revêtements de murs ou de sols en carrelage.

Le document FR A 2576945 décrit un profilé comportant deux semelles d'appui, qui sont réalisées en un matériau dur, semi-rigide, tel que du "PVC" dur, semi-rigide, qui sont, chacune, destinées à être placées parallèlement et en dessous d'un desdits revêtements de surface et qui, chacune, présentent un prolongement s'étendant dans une direction décalée angulairement de sensiblement 90° et destiné à être placé parallèlement à et à proximité d'une tranche d'extrémité dudit revêtement ; et un pont de liaison, qui relie lesdits prolongements des deux semelles d'appui, qui est réalisé en un matériau souple, tel que du "PVC" souple, et qui maintient lesdites semelles d'appui angulairement décalées dudit angle rentrant déterminé. L'invention est caractérisée par les mesures de la partie caractérisante de la revendication 1

Les avantageuses dispositions suivantes sont, en outre, de préférence adoptées :
- chaque semelle d'appui présente des perforations conformées chacune en deux trapèzes égaux ayant leurs petites bases confondues en une petite base commune, ces diverses perforations étant séparées par des parties pleines ;
- le profilé possède les dimensions suivantes : a) la petite base commune des trapèzes d'une perforation a une longueur qui est supérieure à la moitié de la longueur d'une grande base ; b) la largeur d'une perforation, égale à la somme des hauteurs des deux trapèzes la constituant, est comprise entre 0,5 et 1 fois la longueur de la grande base d'un trapèze ; c) la distance de la partie pleine séparant les pointes de deux grandes bases des trapèzes de deux perforations successives est comprise entre 0,4 et 0,6 fois la longueur de la grande base d'un trapèze ;
- lesdits trapèzes sont des trapèzes isocèles ;
- les faces extérieures des semelles d'appui comportent des stries parallèles sur la totalité de leur longueur et de leur largeur ;
- les faces intérieures des parties pleines des semelles d'appui comportent des stries parallèles sur la totalité de leur longueur et de leur largeur ;
- le pont de liaison a une section droite, qui est symétrique par rapport à la bissectrice de l'angle formé par les prolongements des deux semelles d'appui et qui est conformée en un trapèze isocèle, ledit pont de liaison étant placé essentiellement dans l'angle rentrant formé par lesdits prolongements ;
- la petite base du trapèze constituant la section droite du pont de liaison relie les lisières extrêmes des prolongements des deux semelles d'appui et constitue une partie apparente dudit profilé après réalisation de la jonction entre les deux revêtements de surface ;
- l'épaisseur du pont de liaison est comprise entre 3 et 5 fois, de préférence égale à 4 fois l'épaisseur du prolongement d'une semelle d'appui ;
- les épaisseurs des semelles d'appui et celles de leur prolongement sont toutes égales à une même valeur.

L'invention a également pour objet un procédé de fabrication d'un profilé tel que précédemment défini, ce profilé étant réalisé par extrusions simultanées des matériaux constituant chaque semelle d'appui et son prolongement et constituant le pont de liaison.

De manière avantageuse, il est préféré de réaliser lesdites extrusions à chaud.

L'avantage principal d'un profilé conforme à l'invention est d'être apte à réaliser une jonction propre, durable de deux revêtements de surface, tout en étant parfaitement fixé, par ses semelles d'appui, notamment grâce aux perforations et aux striures desdites semelles, aux supports desdits revêtements de surface.

L'invention sera mieux comprise, et des caractéristiques secondaires et leurs avantages apparaîtront au cours de la description d'une réalisation donnée ci-dessous à titre d'exemple.

Il est entendu que la description et les dessins ne sont donnés qu'à titre indicatif et non limitatif.

Il sera fait référence aux dessins annexés, dans lesquels :

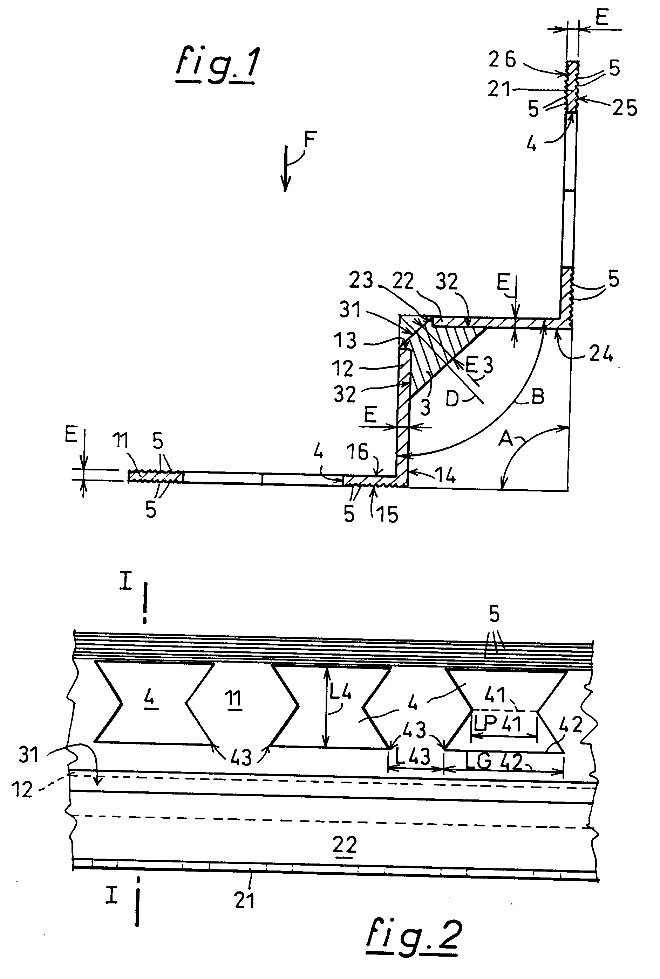

- la figure 1 est une section droite, selon I-I de la figure 2, d'un profilé conforme à l'invention ;
- la figure 2 est une vue suivant flèche F de la figure 1 ; et
- la figure 3 est une coupe de la jonction d'un mur et d'une cloison verticale munis de carrelages, dont la jonction est réalisée par le profilé des figures 1 et 2.

Le profilé représenté comporte:
- deux semelles d'appui 11 et 21, décalées angulairement d'un angle rentrant A, ici égal à 90°, et dans tous les cas égal à l'angle rentrant séparant les faces 81, 91 d'un mur 8 et d'une cloison 9, et séparant aussi les faces 61, 71 des carrelages 6, 7 recouvrant ce mur et cette cloison, respectivement ;
- un prolongement 12, 22 de chaque semelle d'appui 11, 21, respectivement, qui est monobloc avec la semelle d'appui correspondante et décalé de sensiblement 90° par rapport à cette semelle d'appui ;
- un pont de liaison 3, qui est conformé en un trapèze isocèle, et relie les deux prolongements 12 et 22, en étant placé symétriquement par rapport à la bissectrice D de l'angle rentrant B séparant les deux prolongements 12, 22.

Les dispositions suivantes sont notées :
- les semelles d'appui 11, 21 et leurs prolongements 12, 22 sont réalisés en un matériau dur, semi-rigide, tel qu'un "PVC" dur et semi-rigide, ces différents éléments ayant des épaisseurs E égales ;
- le pont de liaison 3 est réalisé en un matériau souple, tel qu'un "PVC" souple et a une épaisseur E3 comprise entre 3 et 5 fois l'épaisseur E d'un prolongement 12, 22, ici égale à 4 fois l'épaisseur E ;
- chaque semelle d'appui (11, 21) et son prolongement (12, 22) est réalisée par extrusion, dans la réalisation décrite, en un "PVC" dur ; de même, le pont de liaison 3, réalisé dans l'exemple décrit en "PCV" souple, est également obtenu par extrusion ; les extrusions de ces trois sous-ensembles sont réalisées simultanément et permettent l'obtention du profilé complet, et, dans les fabrications effectuées ont été réalisées à chaud ; on dit aussi qu'il s'agit de co-extrusion ;
- la petite base 31 du trapèze formant le pont de liaison 3 relie les lisières extrêmes 13, 23 des prolongements 12, 22, cependant que les côtés 32 de ce trapèze sont collés sur les faces 14, 24 desdits prolongements 12, 22 qui délimitent l'angle rentrant B ;
- chaque semelle d'appui 11, 21 présente des perforations 4, ayant la forme de deux trapèzes isocèles réunis par leur petite base commune 41 et ayant une grande base 42, dont les extrémités constituent deux sommets 43 de chaque trapèze, ces perforations 4 étant séparées par des parties pleines ;
- la petite base commune 41 d'un trapèze a une longueur LP41 qui est supérieure à la moitié de la longueur LG42 d'une grande base 42 ;
- la largeur L4 d'une perforation 4, égale à la somme des hauteurs des deux trapèzes constituant cette perforation, est comprise entre 0,5 et 1 fois la longueur LG42 d'une grande base 42 ;
- la distance L43 de la partie pleine séparant deux sommets 43, qui constituent des pointes de deux grandes bases de trapèzes de deux perforations successives, est comprise entre 0,4 et 0,6 fois la longueur LG42 d'une grande base 42 ;
- la face 15, 25 de la semelle d'appui 11, 21, qui est extérieure à l'angle rentrant A, de même que la face 16, 26 intérieure à cet angle rentrant A est striée (stries 5).

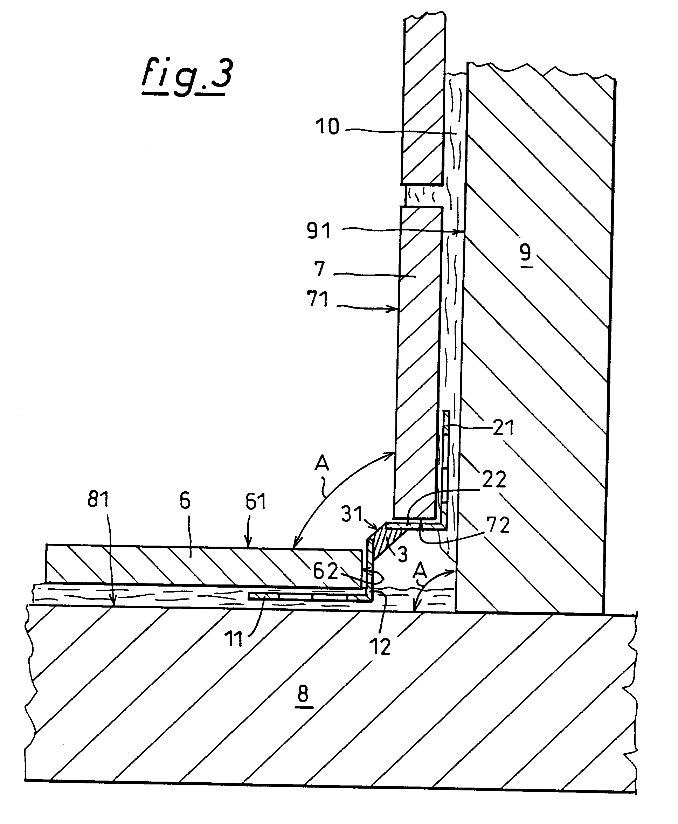

Ce profilé est placé comme représenté sur la figure 3, avec les semelles d'appui 11, 21 placées parallèlement aux faces externes 61, 71, de carrelage 6, 7 qui recouvrent les faces 81, 91 d'un mur 8 et d'une cloison 9, respectivement, qui forment entre elles l'angle rentrant A, ces semelles d'appui 11, 21 étant disposées en dessous des carreaux des deux carrelages et noyées dans le mortier colle 10 de pose desdits carrelages.

Les prolongements 12, 22 sont eux-mêmes disposés parallèlement à, et en regard des tranches d'extrémité 62, 72 des carrelages 6, 7, respectivement. Pratiquement, seule la petite base 31 du trapèze constituant le pont de liaison 3 est visible dans l'angle rentrant A formé par les faces externes 61 et 71 des carrelages 6 et 7.

Les formes des perforations 4 permettent des effets de coincement dans les différentes directions, qui immobilisent parfaitement le profilé dans le mortier colle 10.

Le pont de liaison 3, souple, assure par ailleurs, la liaison entre les prolongements 12, 22 même dans le cas d'un déplacement relatif du carrelage 7 ou de la cloison 9 par rapport au carrelage 6 ou au mur 8, ceci en raison même de sa souplesse. En outre, ce pont de liaison réalise l'étanchéité de la jonction et possède une esthétique inaltérable.

L'invention n'est pas limitée à la réalisation décrite, mais en couvre au contraire toutes les variantes qui pourraient lui être apportées sans sortir de son cadre, tel que défini par les revendications;

## Revendications

1. Profilé destiné à être utilisé pour réaliser la jonction entre deux revêtements de surface (6, 7) faisant entre eux un angle rentrant déterminé (A), tels que des revêtements de murs ou de sols en carrelage, profilé comportant :
- deux semelles d'appui (11, 21), qui sont réalisées en un matériau dur, semi-rigide, tel que du "PVC" dur, semi-rigide, qui sont, chacune, destinées à être placées parallèlement et en dessous d'un desdits revêtements de surface (6, 7) et qui, chacune, présentent un prolongement (12, 22) s'étendant dans une direction décalée angulairement de sensiblement 90° et destiné à être placé parallèlement à et à proximité d'une tranche d'extrémité (62, 72) dudit revêtement (6, 7) ; et
- un pont de liaison (3), qui relie lesdits prolongements (12, 22) des deux semelles d'appui, qui est réalisé en un matériau souple, tel que du "PVC" souple, et qui maintient lesdites semelles d'appui angulairement décalées dudit angle rentrant déterminé (A) ; caractérisé en ce qu'il est monobloc, cependant que le pont de liaison (3) a une section droite, qui est symétrique par rapport à la bissectrice (D) de l'angle formé (B) par les prolongements (12, 22) des deux semelles d'appui (11, 21) et qui est conformée en un trapèze isocèle, ledit pont de liaison étant placé essentiellement dans l'angle rentrant (B) formé par lesdits prolongements.

2. Profilé selon la revendication 1, caractérisé en ce que la petite base (31) du trapèze constituant la section droite du pont de liaison (3) relie les lisières extrêmes (13, 23) des prolongements (12, 22) des deux semelles d'appui et constitue une partie apparente dudit profilé après réalisation de la jonction entre les deux revêtements de surface (6, 7).

3. Profilé selon l'une quelconque des revendications 1 et 2, caractérisé en ce que l'épaisseur (E3) du pont de liaison (3) est comprise entre 3 et 5 fois, de préférence égale à 4 fois l'épaisseur (E) du prolongement (12, 22) d'une semelle d'appui.

4. Profilé selon l'une quelconque des revendications 1 à 3, caractérisé en ce que chaque semelle d'appui présente des perforations (4) conformées chacune en deux trapèzes égaux ayant leurs petites bases confondues en une petite base commune (41), ces diverses perforations (4) étant séparées par des parties pleines.

5. Profilé selon la revendication 4, caractérisé en ce qu'il possède les dimensions suivantes :
a) la petite base commune (41) des trapèzes d'une perforation a une longueur (LP41), qui est supérieure à la moitié de la longueur (LG42) d'une grande base (42) ;
b) la largeur (L4) d'une perforation (4), égale à la somme des hauteurs des deux trapèzes la constituant, est comprise entre 0,5 et 1 fois la longueur (LG42) de la grande base (42) d'un trapèze ;
c) la distance (L43) de la partie pleine séparant les pointes (43) de deux grandes bases des trapèzes de deux perforations (4) successives est comprise entre 0,4 et 0,6 fois la longueur (LG42) de la grande base (42) d'un trapèze.

6. Profilé selon l'une quelconque des revendications 4 et 5, caractérisé en ce que lesdits trapèzes sont des trapèzes isocèles.

7. Profilé selon l'une quelconque des revendications 1 à 6, caractérisé en ce que les faces extérieures (15, 25) des semelles d'appui comportent des stries parallèles (5) sur la totalité de leur longueur et de leur largeur.

8. Profilé selon l'une quelconque des revendications 1 à 7, caractérisé en ce que les faces intérieures (16, 26) des parties pleines des semelles d'appui comportent des stries parallèles (5) sur la totalité de leur longueur et de leur largeur.

9. Profilé selon l'une quelconque des revendications 1 à 8, caractérisé en ce que les épaisseurs des semelles d'appui (11, 21) et celles de leur prolongement (12, 22) sont toutes égales à une même valeur (E).

10. Procédé de fabrication d'un profilé selon l'une quelconque des revendications 1 à 9, caractérisé en ce qu'il est réalisé par extrusions simultanées des matériaux constituant chaque semelle d'appui (11, 21) et son prolongement (12, 22) et constituant le pont de liaison (3).

11. Procédé selon la revendication 10, caractérisé en ce que lesdites extrusions sont réalisées à chaud.

## Patentansprüche

1. Profil zur Verwendung für die Herstellung der Verbindung zwischen zwei Oberflächenverkleidungen (6, 7), die miteinander einen bestimmten einspringenden Winkel (A) einschließen, wie Verkleidungen von Mauern oder Böden aus Fliesenbelägen, welches Profil umfaßt:
- zwei Auflageplatten (11, 21), die aus einem harten, halbstarren Material, wie hartem, halbstarrem "PVC" gebildet sind, welche jeweils dazu bestimmt sind, parallel und unterhalb einer der Oberflächenverkleidungen (6, 7) angeordnet zu werden und die jeweils eine Verlängerung (12, 22) aufweisen, die sich in eine um einen Winkel von im wesentlichen 90° versetzte Richtung erstreckt und in der Nähe eines Endabschnitts (62, 72) der Verkleidung (6, 7) parallel dazu angeordnet werden soll; und
- eine Verbindungsbrücke (3), die die Verlängerungen (12, 22) der beiden Auflageplatten verbindet, welche aus einem nachgiebigen Material, wie nachgiebigem "PVC", gebildet ist und die Auflageplatten in einem Winkel versetzt vom gegebenen einspringenden Winkel (A) hält;
dadurch gekennzeichnet, daß es einstückig ist, wobei die Verbindungsbrücke (3) einen Querschnitt hat, der symmetrisch in bezug auf die halbierende (D) des von den Verlängerungen (12, 22) der beiden Auflageplatten (11, 21) gebildeten Winkels (B) ist und in Form eines gleichschenkeligen Trapezes ausgebildet ist, wobei die Verbindungsbrücke im wesentlichen in dem von den Verlängerungen gebildeten einspringenden Winkel (B) angeordnet ist.

2. Profil nach Anspruch 1, dadurch gekennzeichnet, daß die kleine Basis (31) des den Querschnitt der Verbindungsbrücke (3) bildenden Trapezes die Endränder (13, 23) der Verlängerungen (12, 22) der beiden Auflageplatten verbindet und einen sichtbaren Teil des Profils nach der Herstellung der Verbindung zwischen den beiden Oberflächenverkleidungen (6, 7) bildet.

3. Profil nach einem der Ansprüche 1 und 2, dadurch gekennzeichnet, daß die Dicke (E3) der Verbindungsbrücke (3) 3-bis 5mal, vorzugsweise 4mal, die Dicke (E) der Verlängerung (12, 22) einer Auflageplatte ist.

4. Profil nach einem der Ansprüche 1 bis 3, dadurch gekennzeichnet, daß jede Auflageplatte Perforationen (4) aufweist, die jeweils aus zwei gleichen Trapezen gebildet sind, deren kleine Basen zu einer gemeinsamen kleinen Basis (41) verschmelzen, wobei diese verschiedenen Perforationen (4) durch volle Teile voneinander getrennt sind.

5. Profil nach Anspruch 4, dadurch gekennzeichnet, daß es die folgenden Abmessungen aufweist:
a) die kleine gemeinsame Basis (41) der Trapeze einer Perforation haben eine Länge (LP41), die größer als die Hälfte der Länge (LG42) einer großen Basis (42) ist;
b) die Breite (L4) einer Perforation (4), die gleich der Summe der Höhen der beiden diese bildenden Trapeze ist, ist 0,5-bis 1mal die Länge (LG42) der großen Basis (42) eines Trapezes;
c) die Distanz (L43) des vollen Teils, die die Spitzen (43) zweier großer Basen der Trapeze zweier aufeinanderfolgender Perforationen (4) trennt, ist 0,4-bis 0,6mal die Länge (LG42) der großen Basis (42) eines Trapezes.

6. Profil nach einem der Ansprüche 4 und 5, dadurch gekennzeichnet, daß die Trapeze gleichschenkelige Trapeze sind;

7. Profil nach einem der Ansprüche 1 bis 6, dadurch gekennzeichnet, daß die Außenflächen (15, 25) der Auflageplatten über ihre gesamte Länge and über ihre gesamte Breite parallele Rillen (5) aufweisen.

8. Profil nach einem der Ansprüche 1 bis 7, dadurch gekennzeichnet, daß die Innenflächen (16, 26) der vollen Teile der Auflageplatten über ihre gesamte Länge und über ihre gesamte Breite parallele Rillen (5) aufweisen.

9. Profil nach einem der Ansprüche 1 bis 8, dadurch gekennzeichnet, daß die Dicken der Auflageplatten (11, 21) und jene ihrer Verlängerung (12, 22) alle ein- und demselben Wert (E) entsprechen.

10. Verfahren zur Herstellung eines Profils nach einem der Ansprüche 1 bis 9, dadurch gekennzeichnet, daß es durch gleichzeitige Extrusionen der jede Auflageplatte (11, 21) und ihre Verlängerung (12, 22) sowie die Verbindungsbrücke (3) bildenden Materialien erfolgt.

11. Verfahren nach Anspruch 10, dadurch gekennzeichnet, daß die Extrusionen in Wärme ausgeführt werden.

## Claims

1. Profiled strip adapted to be used for making the join between two surface coverings (6, 7) making therebetween a determined re-entrant angle (A), such as wall or floor tiles, profiled strip comprising:
- two bearing sole plates (11, 21) which are made of a hard, semi-rigid material such as hard, semi-rigid "PVC", which are each adapted to be placed parallel to and below one of said surface coverings (6, 7) and which each present an extension (12, 22) extending in a direction offset angularly by substantially 90° and adapted to be placed parallel to and in the vicinity of an end edge (62, 72) of said covering (6, 7); and
- a connecting bridge (3), which connects said extensions (12, 22) of the two bearing sole plates, which is made of a supple material such as supple "PVC" and which maintains said bearing sole plates angularly offset with respect to said determined re-entrant angle (A);
characterized in that it is monobloc, while the connecting bridge (3) has a cross-section which is symmetrical with respect to the bisectrix (D) of the angle formed (B) by the extensions (12, 22) of the two bearing sole plates (11, 21) and which is shaped as an isosceles trapezium, said connecting bridge being placed essentially in the re-entrant angle (B) formed by said extensions.

2. Profiled strip according to claim 1, characterized in that the small base (31) of the trapezium constituting the cross-section of the connecting bridge (3) connects the end edges (13, 23) of the extensions (12, 22) of the two bearing sole plates and constitutes a visible part of said profiled strip after the join between the two surface coverings (6, 7) has been made.

3. Profiled strip according to any one of claims 1 and 2, characterized in that the thickness (E3) of the connecting bridge (3) is comprised between 3 and 5 times, and preferably equal to 4 times the thickness (E) of the extension (12, 22) of a bearing sole plate.

4. Profiled strip according to any one of claims 1 to 3, characterized in that each bearing sole plate presents perforations (4) each shaped as two equal trapezia having their small bases merged into a common small base (41), these various perforations (4) being separated by solid parts.

5. Profiled strip of claim 4, characterized in that it presents the following dimensions:
a) the common small base (41) of the trapezia of a perforation has a length (LP41) which is greater than half the length (LG42) of a large base (42);
b) the width (L4) of a perforation (4), equal to the sum of the heights of the two trapezia constituting it, is comprised between 0.5 and 1 times the length (LG42) of the large base (42) of a trapezium;
c) the distance (L43) of the solid part separating the angles (43) of two large bases of the trapezia of two successive perforations (4) is comprised between 0.4 and 0.6 times the length (LG42) of the large base (42) of a trapezium.

6. Profiled strip according to any one of claims 4 and 5, characterized in that said trapezia are isosceles trapezia.

7. Profiled strip according to any one of claims 1 to 6, characterized in that the outer faces (15, 25) of the bearing sole plates comprise parallel striae (5) over the whole of their length and their width.

8. Profiled strip according to any one of claims 1 to 7, characterized in that the inner faces (16, 26) of the solid parts of the bearing sole plates comprise parallel striae (5) over the whole of their length and their width.

9. Profiled strip according to any one of claims 1 to 8, characterized in that the thicknesses of the bearing sole plates (11, 21) and those of their extension (12, 22) are all equal to the same value (E).

10. Process for manufacturing a profiled strip according to any one of claims 1 to 9, characterized in that it consists in simultaneous extrusion of materials constituting each bearing sole plate (11, 21) and its extension (12, 22) and constituting the connecting bridge (3).

11. Process according to claim 10, characterized in that said extrusions are effected hot.
